Europäisches Patentamt

(19) European Patent Office    (11) Publication number: **0 120 541**

Office européen des brevets    **B1**

(12)    # EUROPEAN PATENT SPECIFICATION

(45) Date of publication of patent specification: 16.06.87    (51) Int. Cl.⁴: **H 02 G 15/076**

(21) Application number: **84200416.0**

(22) Date of filing: **23.03.84**

(54) A sleeve for protecting cable joints.

(30) Priority: **25.03.83 IE 660/83**

(43) Date of publication of application:
**03.10.84 Bulletin 84/40**

(45) Publication of the grant of the patent:
**16.06.87 Bulletin 87/25**

(84) Designated Contracting States:
**AT BE CH DE FR GB IT LI LU NL SE**

(56) References cited:
**US-A-3 557 299**
**US-A-3 769 443**

(73) Proprietor: **WAVIN B.V.**
**Händellaan 251**
**NL-8031 EM Zwolle (NL)**

(72) Inventor: **Brown, Aynsley Maxwell**
**Appartment 27 Johnstown House Johnstown Park**
**Glasnevin Dublin 11 (IE)**

(74) Representative: **van der Veken, Johannes Adriaan et al**
**EXTERPATENT B.V. Willem Witsenplein 4**
**NL-2596 BK 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

The invention relates to a sleeve for protecting cable joints, particularly the joints in telephone cables, of the type comprising a base cup a mating closure cap, a resilient sealing ring for interposing between the cap and the cup, and clamping means for clamping the cup and cap together without relative rotation therebetween.

One known sleeve of this type, an example of which is illustrated in US—A—3769443, comprises a base cup and mating closure cap with a resilient O-ring seal interposed therebetween. The clamping means for locking the cap and cup together is provided by a two-part handcuff type clamp. The parts of the handcuff clamp are hinged together at one end and are drawn together at their other end by a swing bolt and thumb·nut mechanism.

One of the problems associated with this known sleeve is that it is difficult to access the degree of tightening of the clamp required to effect an adequate seal. If the thumb screw is under-tightened ingress of moisture will occur and if it is over-tightened the clamp will be damaged. Another problem is that in use, the screw threads tend to seize up which makes it difficult to open the clamp without damaging it.

Another difficulty is that because the handcuff clamp comprises six parts, namely two jaws, a pivot pin for the jaws, a swing bolt and associated pivot pin; and a thumb nut, it is expensive to manufacture and particularly expensive to assemble.

The invention is directed towards providing an improved sleeve for protecting joints in electric and particularly telephone cables which will overcome these difficulties.

The invention is characterised in that the clamping means comprises a clamping ring for mounting on one of the cap and cup, and the clamping ring has clamping formations which interengage with complementary formations provided on the other of the cup or cap on rotation of the clamp ring, to draw the cap and cup together.

One advantage of the invention is that the sleeve is more convenient in use as the clamping ring is easier to operate than known handcuff clamps. Another advantage is that in manufacturing the assembly operation is considerably less complicated and hence less expensive than sleeves known heretofore.

In one embodiment of the invention the formations comprise lugs which engage under complementary ramps. The advantage of this feature is that the lugs and ramps are relatively easily moulded and are easily engaged to lock the cup and cap together.

Preferably cables are led through the base cup, the clamping ring is fitted over the cap and is provided with bayonet lugs for interengagement with complementary ramps provided on the cup on rotation of the clamping ring. These features assist in the ease of operation of the sleeve.

In another embodiment of the invention the cup and cap include flanged ends, the cup flange having an axially extending cut-out slot for reception of a stop depending from the cap flange, the stop and slot interchanging on fitting the cup and cap together to prevent relative rotation.

One advantage of this feature is that relative rotation between the cup and cap is prevented while the clamping ring is being rotated to draw the cup and cap together.

Preferably the stop is cut-away to define an axially extending guide slot for alignment with a slot in the cup flange, a lug being passed axially through the slots to align with the leading edge of a ramp. The guide slots assist in aligning the lugs at the leading edges of the ramps.

Typically each bayonet lug comprises a depending side wall portion and an inwardly directed return leg forming an extension of the side wall portion, the return leg having an inclined abutting surface for interengagement with a complementary abutting surface on a ramp. The advantage of having the abutting surfaces inclined is that the clamping force is progressively applied as the operator turns the clamping ring and hence the clamping ring is easily operated.

In another embodiment of the invention locking means are provided to retain the clamping ring in a position clamping the cup and cap together. Preferably the locking means comprises a peg which is inserted in complementary receiving holes formed in the clamping ring, and the cap flange, which are aligned when the cup and cap are locked together. The advantage of this feature is in preventing any possibility of the clamping ring becoming loose in use, particularly due to thermal cycling.

In another embodiment of the invention retaining means are provided for preventing removal of the clamping ring from its associated cup or cap. The retaining means allows the sleeve to be more easily used as an operator does not have to concern himself with the clamping ring as it is always attached to a cup or cap.

The handcuff type clamp used in known sleeves is inconvenient to use as it must be removed from the base cup and cap to allow the sleeve to be opened and can easily be mislaid or dropped by an operator. This is a particular problem when the sleeve is installed in a location which is difficult to access, for example at the top of a telephone pole. Attempts have been made to overcome this particular difficulty by providing a chain extending between the clamp and the top of the cap however it has been found that such chains are easily damaged in use.

Preferably the retaining means comprises a lip extending radially inwardly of the return leg of a lug to engage under the lower edge of the stop walls. The advantage of this particular construction of retaining means is that it can easily be moulded onto the clamping ring to prevent the ring from being removed once it is assembled over the cap.

In another embodiment of the invention the sealing ring comprises a retaining part and an interconnected sealing part, the retaining part being retained relative one or other of the cap or cup and the sealing part projecting between the cup or cap for sealing the space therebetween on rotation of the clamping ring to draw the cap and cup together.

In previously known sleeves a handcuff type clamp was used with an O-ring type seal and a large compressive force was required to retain a good seal. Thus, the clamp was required to be of a high strength and hence expensive material for resisting creep loads which occur due to thermal cycling of the sleeve in use.

In contrast the compressive force required to achieve an adequate seal using a sealing ring having a sealing part and interconnected retaining part is relatively low and hence the clamping ring may be made from a material which is less expensive than that required for a handcuff clamp used with an O-ring seal.

Preferably a base insert is fitted into the cup, the insert having a flanged end, including a return, defining together with the rim of the base cup a channel for entrapping the retaining part of the sealing ring between the insert and cup. The advantage of having a base insert is that it may be made from a material sufficient to resist the heat generated on mixing and curing of the resin which is used for sealing the openings through which the cables are led. In addition, the flange and the base insert forms part of a channel used for entrapping the retaining part of the sealing ring between the cup and cap.

In another embodiment of the invention the base cup or the insert includes means for mounting an over-voltage or lightning protector. The advantage of this feature is that it allows the sleeve to be provided with a protector unit.

In another embodiment of the invention compartments are provided in the cup through which cables are led. Openings in the base cup through which cables are led must be sealed to prevent the ingress of moisture while still allowing other cables to be inserted. By providing compartments the openings for individual cables can easily be sealed without closing off the rest of the base cup.

In the case where an insert is used the compartments will usually be provided in the insert.

The invention will be more clearly understood from the following description thereof given by way of example only with reference to the accompanying drawings in which:

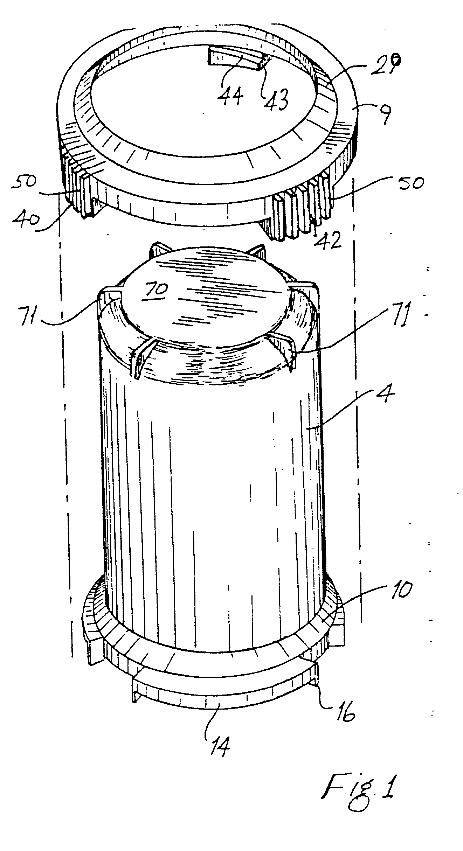

Fig. 1 is an exploded view of the top portion of a sleeve for protecting joints in electric or telephone cables according to the invention,

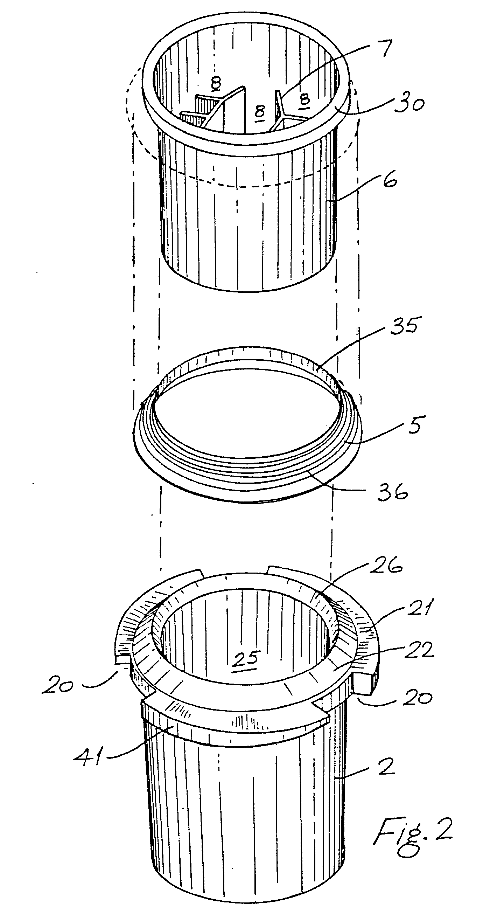

Fig. 2 is an exploded view of the bottom portion of the sleeve,

Fig. 3 is an exploded view on a reduced scale of the sleeve of Figs. 1 and 2 in a position ready for locking,

Fig. 4 is a perspective view of the sleeve of Figs. 1 to 3 in a locked position,

Fig. 5 is an axial sectional view of the sleeve in the locked position,

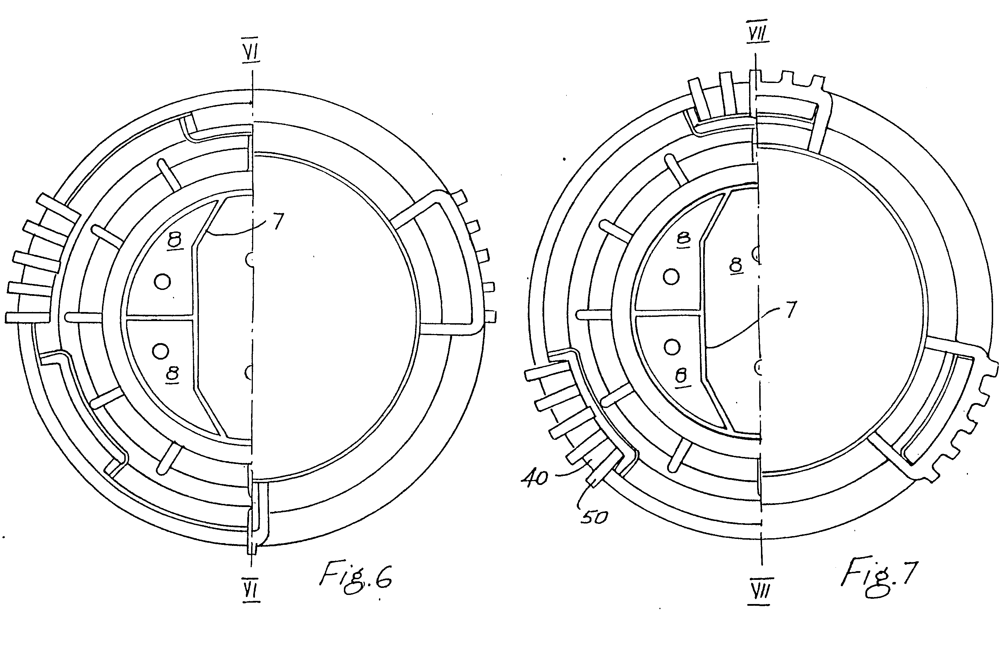

Fig. 6 is a schematic plan view showing the sleeve of Figs. 1 to 5 in the locked position viewed from below to the left of the line VI—VI and viewed from above to the right of the line VI—VI,

Fig. 7 is a view similar to Fig. 6 showing the sleeve in the unlocked position viewed from below to the left of the line VII—VII and viewed from above to the right of the line VII—VII,

Fig. 8 is an axial cross sectional view of a base insert forming part of the sleeve,

Fig. 9 is an exploded view of part of the insert of Fig. 8,

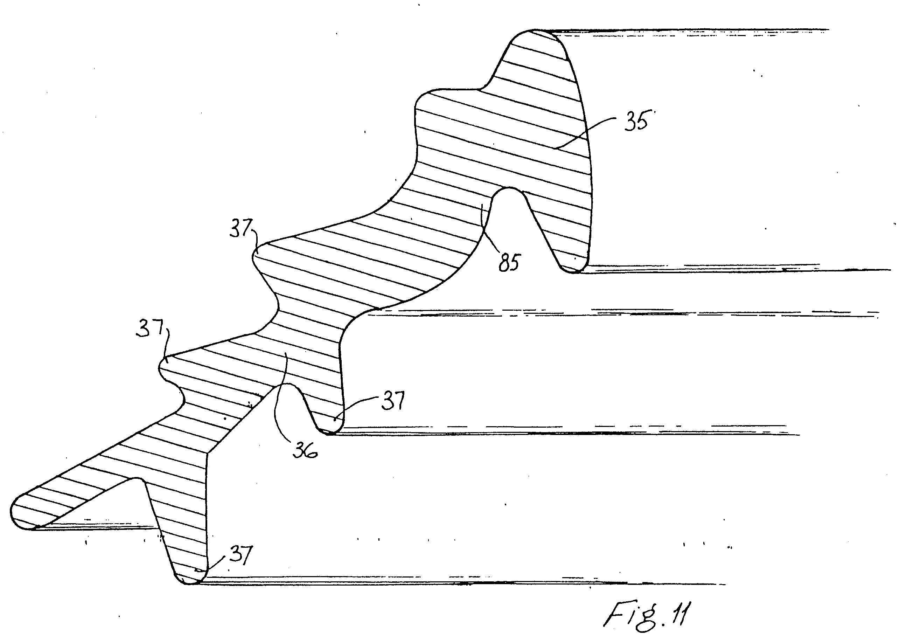

Fig. 10 is a top plan view of the insert of Fig. 8, and

Fig. 11 is a radial cross sectional view on an enlarged scale of a resilient sealing ring used in the sleeve of Figs. 1 to 7.

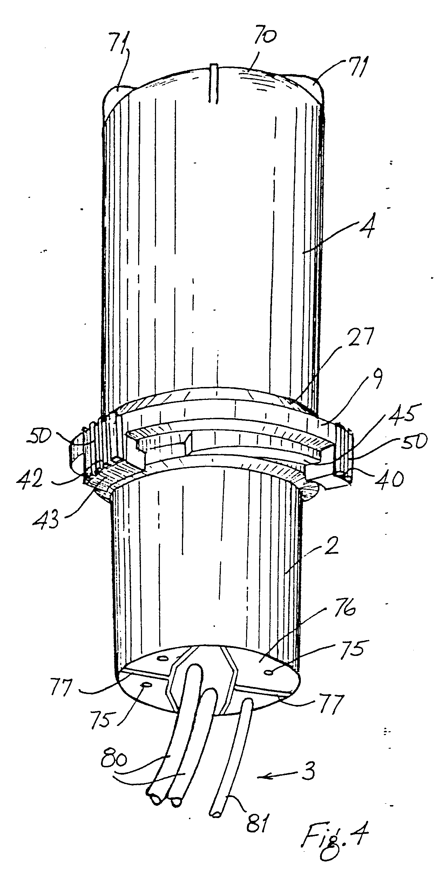

Referring to the drawings there is illustrated a sleeve for protecting joints in electric and especially telephone cables, according to the invention and indicated generally by the reference numeral 1. The sleeve 1 comprises a base cup 2 through which cables 3 are led, (see Fig. 4) a mating closure cap 4 and a resilient sealing ring 5 for interposing between the cap 4 and cup 2. A base insert 6 which is an interference fit in the cup 2 is provided with axially extending partition walls 7 defining compartments 8 through which the cables 3 are led. A clamping ring 9 is provided for clamping the cup 2 and cap 4 together without relative rotation therebetween.

The closure cap 4 is formed with a frusto-conical rim 10 adjacent its mouth 11. Both an inner bearing surface 12 and an outer bearing surface 13 of the rim 10 extend at an angle of approximately 45° to the axis of the cap 4. The rim 10 terminates in a radially extending cap flange 14 having three axially extending equally spaced-apart channel-shaped cut-out slots 15. Channel stop walls 16 depend from the flange 14 to define an extension of each slot 15. The stop walls 15 engage in complementary axially extending slots 20 formed in a cup flange 21 extending radially outwardly from a rim 22 of the base cup 2. On engagement of the stop walls 16 in the complementary slots 20 relative rotation between the cup 2 and cap 4 is prevented.

It will be noted that the rim 22 of the cup 2 has an upper bearing surface 23 for mating with the inner surface 12 of the rim 10 of the closure cap 4 and is also of frusto-conical shape extending at an angle of approximately 45° to the axis of the cup 2. The rim 22 is cut-away adjacent the mouth 25 of the cup 2 to define a lead-in surface 26 for the base insert 6. In addition the clamping ring 9 includes an inner frusto-conical portion 27 which engages against the outer bearing surface 13 on the closure cap rim 10 as the cap 4 and cup 2 are drawn together.

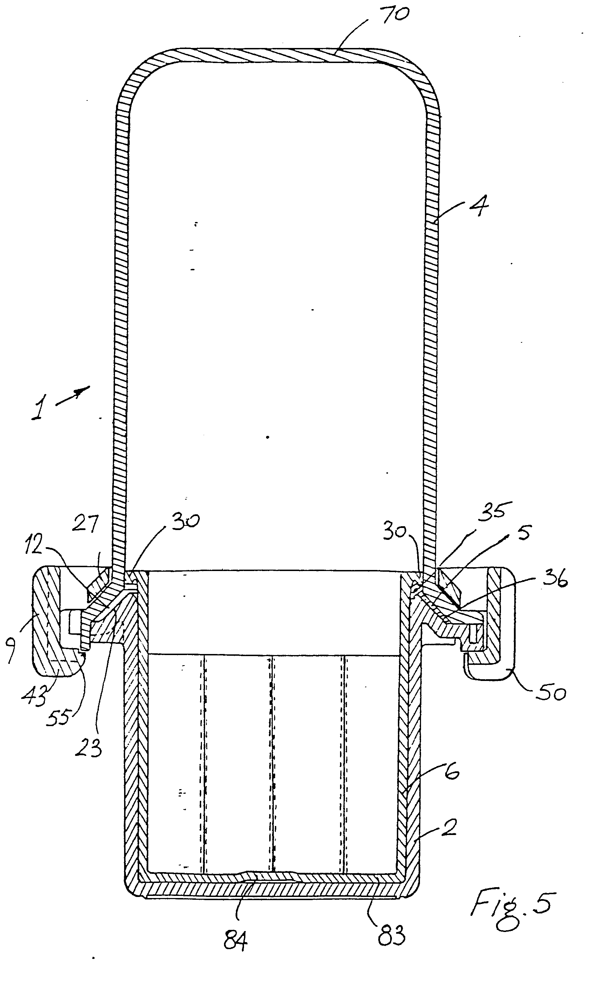

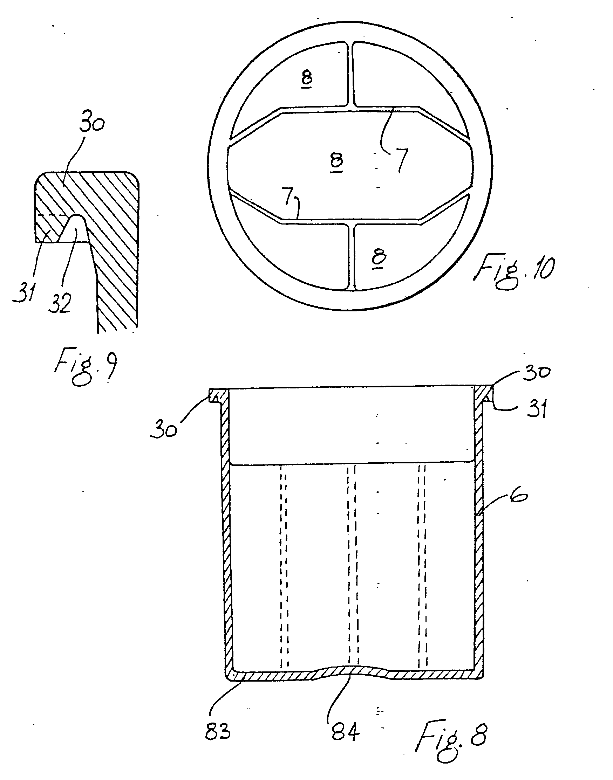

As will be apparent particularly from Figs. 5 and 8 the insert 6 has a flanged end 30 including a return 31 defining together with portion of the rim 22 of the base cup 2 adjacent the mouth 25 a channel 32 for entrapping a retaining part 35 of the sealing ring 5. A sealing part 36 of the ring 5 is drawn against both the bearing surface 23 of the cup 2 and the inner bearing surface 12 of the cap 4 to seal the space between the cup and cap upon rotation of the clamping ring 6.

Both the cup 2 and the clamping ring 9 are formed with complementary formations which interengage on rotation of the ring to draw the cup 2 and cap 4 together. In this case the formations comprise three equally spaced-apart bayonet lugs 40 on the clamping ring 9 which interengage with complementary ramps 41 defined by portion of the flange 21 of the base cup 2 between each slot 20. Each bayonet lug 40 includes a depending side wall 42 and an inwardly directed return leg 43 having an upper inclined abutting surface 44 for interengagement with the complementary abutting surface 45 on a ramp 41. It will be noted that the thickness of each ramp 41 increases in the anti-clockwise direction and that the thickness of the return leg 43 of each bayonet lug 40 also increases in the same direction so that on rotation of the ring 9 relative the cup 2 the abutting surfaces 44, 45 progressively interengage to draw the cup 2 and cap 4 together.

Each bayonet lug 40 on the clamping ring 9 is formed with five spaced-apart reinforcing walls 50 which afford a large cross sectional area for force distribution and hence reduce any creep stress which may be developed in the lugs 40. In addition, the walls 50 also act as bearing surfaces to be hand gripped when the ring is being locked in position or as bearing parts for a spanner or for knocking with a hammer in locking and unlocking the ring.

The clamping ring 9 also includes retaining means for preventing removal of the clamping ring 9 from the closure cap 4. In this case the retaining means comprises a lip 55 (Fig. 5) extending radially inwardly from the outer surface of the return leg 43 of a bayonet lug 40 to engage the lower end of the stop walls 16 on the closure cap 4. In use, the clamping ring 9 is initially fitted onto the closure cap 4 and over the stop walls 16 of the cap by taking advantage of the resilience of the lip 55. Once fitted on, the lip 55 always lies proud of the stop walls 16, thus preventing the clamping ring from being removed.

Locking means (not shown) are also provided for preventing loosening of the clamping ring 9 due to thermal cycling, in use. The locking means may for example comprise a peg which is inserted in a complementary hole in the ring 9 to project through aligned holes in the cup flanges 14 and in some cases also the cap flange 21 in the locked position.

In another arrangement the locking means may comprise a resiliently mounted projecting lug trailing one of the bayonet lugs 40 and engageable in a complementary locking recess on the flange of the closure cap on rotation of the clamping ring. The projecting lug may be arranged so that it is only stressed when the clamping ring is being loosened or tightened.

The closure cap 4 includes a flattened top portion 70 having six equally spaced-apart fins 71 extending around the side edge of the flattened portion 70 to provide abutting surfaces for gripping and turning the cap 4 for alignment of the lugs 40 and ramps 41. The fins also provide convenient lugs which may be used for temporarily mounting the sleeve on a pole or the like. For example, a chain may be extended between a fin and the clamping ring to provide a loop for temporarily mounting the closure cap 4 while the cables are being fitted into the cup 2.

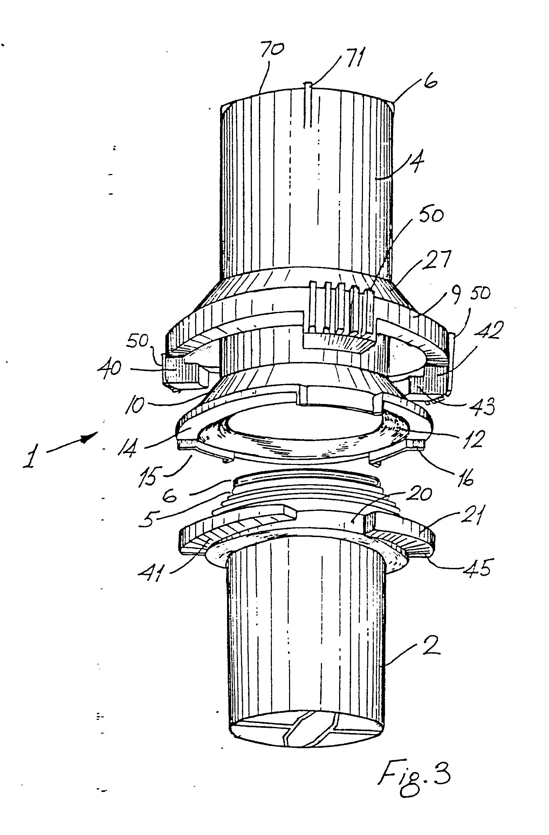

As will be apparent from Figs. 3 and 4 the base cup 2 includes a number of countersink marks 75 formed in its bottom wall 76. Each mark 75 lies at approximately the centre of a compartment 8 in the insert 6 and indicates the position of the centre of the hole which must be drilled through the wall 76 and insert 6 for insertion of cables. The pattern of the partition walls 7 of the compartments 8 is also marked out on the underside of bottom wall 76 of the cup 2 by indicating lines 77.

Referring particularly to Figs. 8 and 9 it will be noted that the base insert 6 is formed in this case with 5 compartments 8, one large central compartment and four peripheral smaller compartments. This particular construction of base insert can accommodate six cables, namely two main cables 80 inserted through the central compartment and four secondary cables, one 81 of which is shown in Fig. 4 and each inserted in one of the peripheral compartments and joined to the main cable 80 inside the sleeve 1. The base 83 of the insert 6 is dished at 84 for ease of moulding.

In use, when the cable is inserted into the sleeve through the base cup and insert resin is added to fill the compartment through which the cable has been led to fix the cable in position and prevent ingress of moisture through the hole made for the cable in the base cup and insert. In order to resist the heat generated by the resin the insert 6 is usually of polycarbonate material.

Referring particularly to Fig. 11 the resilient sealing ring 5 includes the retaining part 35 and sealing part 36 as already described and a connecting part 85 interconnecting the retaining and the sealing parts. The sealing ring is similar to that described in Irish Patent Specification No. 45368 however, it will be appreciated that in this case the ring 5 seals against ingress of material into the sleeve 1 and also internal air pressure developed in the sleeve. It will be noted that the sealing part 36 of the ring 5 extends at an angle of approximately 45° to the axis of the retaining part 35 and comprises a plurality of inner and outer lips 37 to seal against the frusto-conical surfaces 23, 12 of the cup and cap respectively. The particular advantage of using a sealing ring of this type is to afford a better seal at low pressure than is generally possible with rubber O-rings.

In operation, when the operator determines which compartments are to be used holes are drilled through the appropriate parts of the base cup and insert. The prepared cable ends are then passed through the holes in the base cup and insert to their required positions. Before jointing the cables resin is added to those compartments through which cables have been led to seal the cables into position in the compartments and prevent the ingress of dirt and moisture through the holes drilled in the base cup and insert. Jointing of the cables is started once the resin has sufficiently set to hold the cables firmly into position in the base and cup and insert.

During the cable insertion and jointing operation the dome cap and associated clamping ring are retained in any convenient location for example by hanging on a suitable hook on a telegraph pole as already described.

When the resin has set sufficiently the dome cap is then placed over the cable joints and the stop walls 16 engaged in the slots 20. The clamping ring is then rotated to engage the bayonet lugs 40 with the ramps 41 thus drawing the cap and cup into sealing engagement against the sealing ring 9. The clamping ring may be retained in the locked position by any suitable means such as the peg inserted through aligned holes in the clamping ring, cup and cap as already described.

It will be appreciated that the formations which interengage on rotation of the clamping ring may be of any convenient configuration. For example, the formations may comprise a screw threaded portion on the ring and a complementary screw threaded portion on the cup. One advantage of such an arrangement would be that a large surface area of contact is provided and hence the clamping ring should resist any pressure which may be developed inside the sleeve.

It will also be appreciated that while the resilient sealing ring has been described as retained in position by entrapment it may in certain cases be retained in position by compression. Indeed, it will be appreciated that any suitable construction of sealing ring may be employed and in some cases it may be possible to use an O-ring.

The sealing ring may be modified as required to resist both internal air pressure and ingress of material such as water. For example, the ring may have a plurality of lips some of which are arranged to resist ingress of material and others to resist internal air pressure.

In the case where the sleeve does not include a base insert and the compartments are formed directly in the base cup the retaining part of a sealing ring may be adapted for fitting onto the cup or cap. For example, the retaining part may be formed with a depending leg which may include formations which interengage with complementary formations around the rim of the cap or cup to retain the seal in position. These formations may for example comprise cut-out grooves in the retaining part of the sealing ring which interengage with complementary pips around the rim of the cup or cap. Alternatively, or additionally the retaining part of the sealing ring may be formed with an inner cut-out groove adjacent the transition between the connecting part and retaining part to allow the depending leg of the retaining part to be bent inwardly for fitting into the cup or cap, the resilience of the material in the retaining part biasing the de-

pending leg of the retaining part back against the wall of the cup or cap for retaining the seal in position.

In order to resist the heat generated by the resin the insert 6 is usually of polycarbonate material. In this case the base cup 2, closure cap 4 and clamping ring 9 are injection moulded from a plastics material such as polypropylene. The base insert and clamp may also be of any suitable plastics material. Alternatively the base insert may be omitted and the base cup formed from any material suitable to resist the heat generated by the resin. The material of the base cup is selected to match with the particular resin used. When the base insert is omitted the base cup may include partition walls defining compartments for insertion of cables.

It is envisaged that instead of providing compartments in the base cup either by way of an insert or directly in the cup the base cup may be formed with hollow cylindrical teats into which the cables to be joined are led and which may be heat shrunk onto the cables to prevent ingress of moisture and dirt.

It is also envisaged that the sleeve may incorporate means for mounting an over-voltage or lightning protector unit. For example, such a unit may be formed with a longitudinally extending cut-out slot to engage over one of the partition walls of the compartments in the base insert or cup. Alternatively, or additionally the base insert or cup or indeed the dome cap may be formed with location grooves for mounting the protector unit.

## Claims

1. A cable joint protecting sleeve (1) comprising a base cup (2), a mating closure cap (4), a resilient sealing ring (5) for interposing between the cup (2) and cap (4), and the clamping means (9) for clamping the cap (4) and cup (2) together without relative rotation therebetween characterised in that the clamping means comprises a clamping ring (9) for mounting on one of the cap (4) and cup (2), the clamping ring (9) having clamping formations which interengage with complementary formations provided on the other of the cup (2) or cap (4) on rotation of the clamping ring to draw the cap (4) and the cup (2) together.

2. A sleeve (1) as claimed in claim 1 characterised in that the formations comprise lugs (40) which engage under complementary ramps (41).

3. A sleeve (1) as claimed in claim 2 characterised in that cables are led through the base cup (2), the clamping ring (9) is fitted over the cap (4) and is provided with bayonet lugs (40) for interengagement under complementary ramps (41) provided on the cup (2) on rotation of the clamping ring (9).

4. A sleeve (1) as claimed in any of claims 1 to 3 characterised in that the cup (2) and cap (4) include flanged ends, the cup flange (21) having an axially extending cut-out slot (20) for reception of a stop (16) depending from the cap flange (14), the stop (16) and slot (20) interengaging on fitting the cup (2) and cap (4) together to prevent relative rotation.

5. A sleeve (1) as claimed in claim 4 characterised in that the stop (16) is cut-away to define an axially extending guide slot (15) for alignment with a slot (20) in the cup flange (21), a lug being passed axially through the slot (20) to align with the leading edge of a ramp (41).

6. A sleeve (1) as claimed in any of claims 3 to 5 characterised in that each bayonet lug (40) comprises a depending side wall portion (42) and an inwardly directed return leg (43) forming an extension of the side wall portion, the return leg (43) having an inclined abutting surface (44) for interengagement with a complementary abutting surface (45) on a ramp (41).

7. A sleeve (1) as claimed in any of claims 4 to 6 characterised in that locking means in the form of a peg for insertion in complementary receiving holes formed in the clamping ring (9), and the cap flange 14 which are aligned when the sleeve (1) is in the locked position, are provided to lock the clamping ring (9).

8. A sleeve (1) as claimed in claims 6 or 7 characterised in that retaining means (55) in the form of a lip (55) extending radially inwardly of the return leg (43) of a lug (40) to engage under the lower edge of the stop walls (16), are provided for preventing removal of the clamping ring (9) from the cap (4).

9. A sleeve as claimed in any preceding claim characterised in that the sealing ring (5) comprises a retaining part (35) and an interconnected sealing part (36), the retaining part (35) being retained relative to one or other of the cap (4) or cup (2) and the sealing part (36) projecting between the cup (2) and cap (4) for sealing the space therebetween on rotation of the clamping ring (9) to draw the cap (4) and cup (2) together.

10. A sleeve (1) as claimed in claim 9 characterised in that a base insert (6) is fitted into the cup (2), the insert (6) having a flanged end (30) including a return (31), defining together with a rim (22) of the base cup a channel (32) for entrapping the retaining part (35) of the sealing ring (9) between the insert (6) and cup (2).

**Patentansprüche**

1. Muffe (1) für den Schutz von Kabelverbindungen, bestehend aus einem Basisnapf (2), einer passenden Verschlußkappe (4), einem elastischen Dichtungsring (5) zum Zwischensetzen zwischen den Napf (2) und die Kappe (4) und einer Klemmeinrichtung (9) zum Zusammenklemmen der Kappe (4) und des Napfes (2) ohne Relativdrehung zwischen diesen, dadurch gekennzeichnet, daß die Klemmeinrichtung einen Klemmring (9) zur Anbringung an einem der von der Kappe (4) und dem Napf (2) gebildeten Teile umfaßt und der Klemmring (9) Klemmausbildungen aufweist, die mit an dem anderen der von dem Napf (2) und der Kappe (4) gebildeten Teile vorgesehenen Gegenausbildungen bei Drehung des Klemmringes zum Zusammenziehen der Kappe und des Napfes (2) in Eingriff gelangen.

2. Muffe (1) nach Anspruch 1, dadurch gekennzeichnet, daß die Ausbildungen Nasen (40) umfassen, die unter Gegenrampen (41) in Eingriff gelangen.

3. Muffe (1) nach Anspruch 2, dadurch gekennzeichnet, daß Kabel durch den Basisnapf (2) hindurchgeführt sind und der Klemmring (9) über die Kappe (4) gesetzt sowie mit Bajonettnasen (40) für einen Eingriff unter am Napf (2) vorgesehene Gegenrampen (41) bei Drehung des Klemmringes (9) versehen ist.

4. Muffe (1) nach einem der Ansprüche 1 bis 3, dadurch gekennzeichnet, daß der Napf (2) und die Kappe (4) Flanschenden aufweisen, der Napfflansch (21) einen axial verlaufenden Schlitzausschnitt (20) zur Aufnahme eines vom Kappenflansch (14) nach unten weisenden Anschlags (16) aufweist und der Anschlag (16) und der Schlitz (20) beim Zusammenpassen des Napfes (2) und der Kappe (4) zur Verhinderung einer Relativdrehung in Eingriff gelangen.

5. Muffe (1) nach Anspruch 4, dadurch gekennzeichnet, daß der Anschlag (16) zur Ausbildung eines axial verlaufenden Führungsschlitzes (15) für eine Ausrichtung mit einem Schlitz (20) im Napfflansch (21) ausgenommen ist und eine Nase axial durch den Schlitz (20) zur Ausrichtung mit der Führungskante einer Rampe (41) hindurchgeführt ist.

6. Muffe (1) nach einem der Ansprüche 3 bis 5, dadurch gekennzeichnet, daß jede Bajonettnase (40) einen abwärts weisenden Seitenwandbereich (42) und einen nach innen weisenden Schenkel (43) umfaßt, der eine Verlängerung des Seitenwandbereiches bildet, und daß der nach innen weisende Schenkel (43) eine schräge Anlagefläche (44) für einen Eingriff mit einer Gegenanlagefläche (45) an einer Rampe (41) aufweist.

7. Muffe (1) nach einem der Ansprüche 4 bis 6, dadurch gekennzeichnet, daß Sicherungsmittel in Form eines Stiftes zum Einsetzen in sich ergänzende, im Klemmring (9) und im Kappenflansch (14) gebildete Aufnahmelöcher, die miteinander fluchten, wenn die Muffe (1) ihre Schließposition einnimmt, zum Sichern des Klemmringes (9) vorgesehen sind.

8. Muffe (1) nach Anspruch 6 oder 7, dadurch gekennzeichnet, daß Haltemittel (55) in Form einer Lippe (55), die sich radial nach innen vom Schenkel (43) einer Nase (40) für einen Eingriff unter dem unteren Rand der Anschlagwände (16) erstreckt, zur Verhinderung einer Entfernung des Klemmringes (9) von der Kappe (4) vorgesehen sind.

9. Muffe nach einem der vorhergehenden Ansprüche, dadurch gekennzeichnet, daß der Dichtungsring (5) einen Halteteil (35) und einen damit verbundenen Dichtungsteil (36) umfaßt, der Halteteil (35) in bezug auf das eine oder das andere der von der Kappe (4) und dem Napf (2) gebildeten Teile festgelegt ist und der Dichtungsteil zwischen den Napf (2) und die Kappe (4) vorragt, um den Raum zwischen diesen beim Drehen des Klemmrings (9) zum Zusammenziehen der Kappe (4) und des Napfes (2) abzudichten.

10. Muffe (1) nach Anspruch (9), dadurch gekennzeichnet, daß ein Basiseinsatz (6) in den Napf (2) eingepaßt ist und der Einsatz (6) ein Flanschende (30) mit einer Umbiegung (31) aufweist, die zusammen mit einem Rand (22) des Basisnapfes einen Kanal (32) zum Einschließen des Halteteils (35) des Dichtungsrings (9) zwischen dem Einsatz (6) und den Napf (2) bildet.

## Revendications

1. Manchon (1) pour la protection d'une jonction de câbles, comprenant un culot de base (2), un capuchon de fermeture (4) s'adaptant sur ce dernier, une bague d'étanchéité élastique (5) destinée à être interposée entre le culot (2) et le capuchon (4), et des moyens de serrage (9) pour bloquer l'un sur l'autre le capuchon (4) et le culot (2) en interdisant toute rotation relative entre ces derniers, caractérisé en ce que les moyens de serrage comprennent une bague de serrage (9) destinée à être monté sur l'un des éléments constitués par le capuchon (4) et le culot (2), la bague de serrage (9) comportant des structures de blocage qui viennent en prise mutuelle avec des structures complémentaires formées sur le second élément constitué par le culot (2) ou le capuchon (4), lors de la rotation de la bague de serrage, rapprochant l'un de l'autre le capuchon (4) et le culot (2).

2. Manchon (1) tel que défini dans la revendication 1, caractérisé en ce que les structures comprennent des ergots (40) qui s'engagent sous des rampes complémentaires (41).

3. Manchon (1) tel que défini dans la revendication 2, caractérisé en ce que les câbles passent à travers le culot de base (2), la bague de serrage (9) est mise en place sur le capuchon (4) et est munie d'ergots de joint à baïonnette (40) destinés à s'engager sous des rampes complémentaires (41) présentes sur le culot (2), lors de la rotation de la bague de serrage (9).

4. Manchon (1) tel que défini dans l'une quelconque des revendications 1 à 3, caractérisé que le culot (2) et le capuchon (4) comportent des extrémités à bride, la bride (21) du culot présentant une fente découpée (20) s'étendant dans la direction axiale pour recevoir un arrêtoir (16) qui pend de la bride (14) du capuchon, l'arrêtoir (16) et la fente (20) venant en prise mutuelle pour empêcher toute rotation relative, lorsque le culot (2) et le capuchon (4) sont ajustés l'un sur l'autre.

5. Manchon (1) tel que défini dans la revendication 4, caractérisé en ce que l'arrêtoir (16) est découpé pour définir une fente de guidage axiale (15) destinée à venir en alignement avec une fente (20) ménagée dans la bride (21) du culot, un ergot s'étendant axialement à travers la fente (20) pour être aligné avec le bord d'amorce d'une rampe (41).

6. Manchon (1) tel que défini dans l'une quelconque des revendications 3 à 5, caractérisé en ce que chaque ergot de joint à baïonnette (40) comprend un élément de paroi latéral pendant (42) et une branche rentrante (43) dirigée vers l'intérieur et formant un prolongement de l'élément de paroi latéral, la branche rentrante (43) présentant une surface de butée inclinée (44) destinée à venir en prise mutuelle avec une surface de butée complémentaire (45) ménagée sur une rampe (41).

7. Manchon (1) tel que défini dans l'une quelconque des revendications 4 à 6, caractérisé en ce qu'un moyen de verrouillage en forme de patère, destiné à s'insérer dans des trous de réception complémentaires qui sont formés dans la bague de serrage (9) et la bride (14) du capuchon et qui sont alignés lorsque le manchon (1) est dans la position de verrouillage, est prévu pour verrouiller la bague de serrage (9).

8. Manchon (1) tel que défini dans la revendication 6 ou 7, caractérisé en ce que des moyens d'arrêt (55) qui se présentent sous la forme d'une lèvre (55) s'étendant axialement vers l'intérieur sur la branche rentrante (43) d'un ergot (40), pour s'engager sous le bord inférieur des parois de l'arrêtoir (16), sont prévus pour empêcher la bague de serrage (9) de se séparer du capuchon (4).

9. Manchon tel que défini dans l'une quelconque des revendications précédentes, caractérisé en ce que la bague d'étanchéité (5) comprend une partie d'arrêt (35) et une partie d'étanchéité (36) reliée à cette dernière, la partie d'arrêt (35) étant immobilisée par rapport au capuchon (4) ou au culot (2) et la partie d'étanchéité (36) faisant saillie entre le culot (2) et le capuchon (4) pour étanchéifier l'espace formé entre ces derniers, lors de la rotation de la bague de serrage (9) rapprochant l'un de l'autre le capuchon (4) et le culot (2).

10. Manchon (1) tel que défini dans la revendication 9, caractérisé en ce qu'un insert de base (6) est placé dans le culot (2), l'insert (6) présentant une extrémité à bride (30) qui comporte un bord replié (31), délimitant avec un rebord (22) du culot de base un canal (32) destiné à emprisonner la partie d'arrêt (35) de la bague d'étanchéité (9) entre l'insert (6) et le culot (2).

Fig. 1

Fig.2

Fig.3

Fig.4

Fig.5

Fig.6

Fig.7

0 120 541

Fig. 9

Fig. 10

Fig. 8

35

37

37

85

37

36

37

Fig. 11